# EUROPEAN PATENT SPECIFICATION

(11) **EP 1 312 812 B1**
(45) Date of publication and mention of the grant of the patent: **08.02.2006**
(21) Application number: 02257753.0
(22) Date of filing: 08.11.2002
(51) Int. Cl.: F16B 31/02, F16B 37/02

(54) **Fastening element**
Befestigungselement
Elément de fixation

(30) Priority: 20.11.2001 GB 0127734
(43) Date of publication of application: 21.05.2003
(73) Proprietor: ITW Limited, Windsor Berkshire SL4 3BL (GB)
(72) Inventor: Cheal, Jonathan Paul Anthony, Tamworth, Staffordshire B79 7UA (GB)
(74) Representative: Roberts, David Leslie

(56) References cited:
- GB-A- 637 562
- US-A- 3 198 229
- US-A- 3 548 704
- US-A- 4 479 747
- US-A- 4 969 788
- US-A- 5 090 854

## Description

### Field of the Invention

This invention relates to a fastening element for use with a tie member to fasten a first component to a second component, to an indicator element for use with such a fastening element to indicate fastness of said components, and to a method of securing a first component to a second component using such an element and a tie member.

### Background to the Invention

It is well known to fasten two or more components together by passing a bolt through the components and tightening a nut onto the bolt, so that the bolt head and nut each exert a clamping force on the components.

Vibration and flexure of the components tend to loosen the nut on the bolt, and such loosening is prevented only by friction between the bolt head and nut and the components.

US Patent No. 3,198,229 shows a fastening element for use with a tie member to fasten a first component to a second component, the fastening element being adapted for attachment to the tie member, which in use passes through a part of at least one of the components, and for co-operating with the tie member to exert a compressive force on the components, the element comprising an inner portion resiliently joined to an outer portion, in such a way that, when a tensile reaction force is applied to the tie member as a result of said compressive force, said force causes the outer portion to be displaced relative to the inner portion.

The fastening element of US Patent No. 3,198,229 is a nut for use with a tie member in the form of a bolt, the outer portion being resiliently displaced relative to the inner portion by the clamping force exerted on the components so as to bear against the components in the event of a momentary reduction of the clamping force, for example due to flexure of the components, so as to prevent the nut from loosening.

A particular combination of components, nut and bolt will have an optimum clamping force, which gives a high degree of friction between the bolt head, nut and components, but avoids excessive distortion of the components, snapping the bolt or stripping the threads of the bolt or nut.

Once the optimum clamping force has been determined, taking into account thread pitch, bolt diameter, loaded bolt length, and lubricity, surface finish and dimensional variation of the components, the clamping force is obtained by applying a predetermined torque to the nut.

At present, the only method of determining whether a nut has been correctly tightened is by means of a torque spanner. However, if the nut has been correctly tightened, the application of the torque spanner to the nut will cause the nut to be further tightened, and the optimum clamping force to be exceeded.

### Summary of the Invention

According to a first aspect of the invention there is provided a fastening element for use with a tie member to fasten a first component to a second component, the fastening element being adapted for attachment to the tie member, which in use passes through a part of at least one of the components, and for cooperating with the tie member to exert a compressive force on the components, the element comprising an inner portion resiliently joined to an outer portion, in such a way that, when a tensile reaction force is applied to the tie member as a result of said compressive force, said force causes the outer portion to be displaced relative to the inner portion, characterised in that, when the fastening element is not stressed, end surfaces of the inner and outer portions are coplanar.

The invention therefore provides a fastening element for use with a tie member, which element enables the magnitude of a tensile force applied to the tie member to be determined without altering the magnitude of the force, and which is operable to prevent relative movement of the fastening element and the tie member in the event of a momentary reduction of the compressive force on the components.

Preferably the inner portion is formed integrally with the outer portion.

Preferably the relative position of the inner and outer portions which share a substantially common axis is such that the displacement of the outer portion relative to the inner portion is an axial displacement.

The fastening element may be attached to the tie member by any convenient means, for example crimping onto, or welding to, the member, or may be integrally formed with the tie member. Preferably, however, the inner portion is tapped so as to be engageable with a threaded portion at a first end of the member.

Said compressive force may be exerted by means of a nut tightened against the second component onto a threaded portion at a second end of the member, but preferably the outer portion of the element is formed with flats for engagement with a spanner or like tool, such that the compressive force and hence the tensile reaction force may be applied by means of tightening the element, against the first component, onto the threaded portion at the first end of the member. In this case the second end of the member may be formed with a head for engagement with the second component, or be fastened to the second component, for example by welding, or the member may be integrally formed with the second component.

The fastening element may advantageously be formed from sheet or strip spring steel.

Preferably, the fastening element comprises a nut, for use with a tie member in the form of a bolt or stud.

The fastening element may advantageously further comprise a washer that is rotatably attached to the nut, and that, in use, is interposed between the nut and the components.

Preferably the washer is annular, such that in use, the tie member passes through the washer.

The fastening element may advantageously further comprise cage means having first and second pluralities of axial, radially inwardly projecting claws, the first plurality of claws being engageable with the nut and the second plurality of claws being engageable with the washer.

In a preferred embodiment of the fastening element the nut is formed with a generally frusto-conical portion and the annular washer is formed with a continuous groove in its external circumference, and the first plurality of claws of the cage are engageable with the frusto-conical portion of the nut and the second plurality of claws are engageable with the groove of the washer.

Preferably the washer is formed from hardened steel and the cage is formed from mild or spring steel.

In this way during tightening of a tapped fastening element onto a threaded tie member against a component, the nut rotates against the washer rather than against the component, and there is little, if any, relative movement between the washer and the component, such that scoring of the surface of the component is much reduced.

According to a second aspect of the invention there is provided an indicator element for use with a fastening element in accordance with the first aspect of the invention, the indicator element having engagement means that are releasably engageable with the outer portion of a fastening element such that the indicator element is retained by the fastening element when the outer portion of the fastening element is displaced relative to the inner portion, and released if the displacement of the outer portion relative to the inner portion decreases substantially.

The second aspect of the invention therefore provides an indicator element that may be engaged with a fastening element in accordance with the first aspect of the invention, once the fastening element is exerting a desired compressive force on a component, but which will be released from the fastening element if the compressive force decreases by a substantial amount, for example due to loosening of the fastening element, and hence provides a visual indication of the decrease in the compressive force.

Moreover, the indicator element enables a very quick check to be carried out of whether a fastening element is exerting a desired compressive force on a component, simply by attempting to engage the indicator element with the fastening element, since the indicator element will be retained only if the fastening element is exerting the desired compressive force.

The engagement means of indicator element may advantageously be releasably engageable with an internal surface of the outer portion of the fastening element when the outer portion is displaced relative to the inner portion.

In a preferred embodiment the indicator element comprises a cap for placing over the fastening element and the engagement means comprises a central internal tubular member of the cap with a perpendicularly with a perpendicularly outwardly projecting lip that is engageable with an internal surface of the outer portion of the fastening element when the outer portion is displaced relative to the inner portion. When the outer portion-is-not displaced relative to the inner portion, the external surface of the inner portion occludes the internal surface of the outer portion, such that the lip of the tubular member cannot engage with the internal surface of the outer portion.

The indicator element may advantageously be formed from a plastics material.

Preferably the indicator element is formed from nylon-66.

According to a third aspect of the invention there is provided a method of securing a first component to a second component, by means of a fastener comprising an element as hereinabove described and a tie member, the method comprising the steps of applying a progressively increasing compressive force to the two components, by means of the fastener, and determining whether said displacement of the inner portion relative to the outer portion reaches a minimum magnitude indicative of a minimum desired magnitude of compressive force.

The step of determining whether the displacement reaches a minimum magnitude may advantageously be by measurement of the displacement of the inner portion relative to the outer portion.

Preferably the step of determining whether the displacement reaches a minimum magnitude is by visual inspection of the displacement of the inner portion relative to the outer portion.

Alternatively, the step of determining whether the displacement reaches a minimum magnitude may advantageously be by attempting to engage an indicator element as hereinbefore described with the fastening element, and observing whether the indicator element is retained by the fastening element.

The method may advantageously further comprise the step of determining whether the displacement of the inner portion relative to the outer portion is less than a maximum magnitude, corresponding to a maximum desired magnitude of compressive force.

Preferably the inner portion of the fastening element is tapped and a first end of the tie member has a threaded portion, the step of applying the compressive force being achieved by screwing the tapped inner portion of the element onto the threaded portion of the member.

Preferably the outer portion of the fastening element is formed with flats for engagement with a spanner or like tool, and the step of applying said force is achieved by applying a torque to the fastening element.

The invention also lies in a nut comprising a fastening element as hereinabove described and a bolt for use therewith.

The invention will now be described by way of illustrative example and with reference to the accompanying drawings, in which:
Figure 1 is a perspective view of a first nut in accordance with the first aspect of the invention;
Figure 2 is a sectional view of the first nut;
Figure 3 is a representation of the manufacturing process of the first nut;
Figure 4 is an exploded view of a tool used in the manufacturing process;
Figure 5 is a perspective view of a second nut;
Figure 6 is a sectional view of the second nut;
Figure 7 is a sectional view of the second nut when tightened onto a stud;
Figure 8 is a sectional view of an indicator cap in accordance with the second aspect of the invention; and
Figure 9 is a sectional view .of the second nut when tightened onto the stud and fitted with the indicator cap.

### Detailed Description of an Embodiment

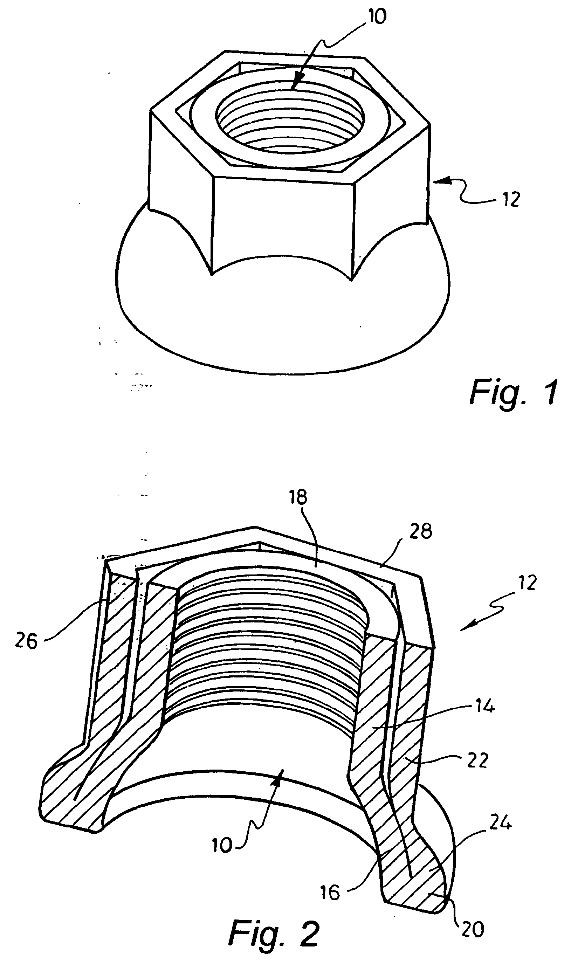

The first nut of Figure 1 consists of an inner portion 10 and an outer portion 12, the inner and outer portions being integrally formed as a single component from spring steel.

Turning to Figure 2, the inner portion 10 is generally tubular, having a cylindrical neck 14 and a frusto-conical skirt 16. The internal surface of the neck is tapped for engagement with the threads of a bolt or stud (not shown). The external surface of the neck 14 is cylindrical. The end surface 18 of the neck 14 is planar. The internal and external surfaces of the skirt 16 are frusto-conical and the end surface of the skirt forms a first part of the base 20 of the nut.

The outer portion 12 is also generally tubular, having a hexagonal neck 22 and a generally frusto-conical skirt 24. The internal and external surfaces of the neck 22 are hexagonal, the six flats of the external surface, one of which, 26, is visible in Figure 2, being adapted to enable the nut to be tightened onto the bolt or stud by, for example, a torque spanner. The end surface 28 of the neck 22 is also planar. The internal and external surfaces of the skirt 24 are generally frusto-conical, and the end surface of the skirt forms a second part of the base 20 of the nut.

The nut is complicate in structure, such that the skirt 16 of the inner portion 10 is joined at the base 20 of the nut to the skirt 24 of the outer portion 12, the external surface of the skirt 16 is in contact with the internal surface of the skirt 24, and the cylindrical external surface of the neck 14 is in contact with the hexagonal internal surface of the neck 22 at the midpoint of each of its sides. When the nut is not stressed, the end surfaces of the inner and outer portions, 18 and 28 respectively, are coplanar.

In use, the nut is tightened onto a bolt that passes through part of a component, until the base 20 of the nut engages with the component. As the nut is tightened further onto the bolt against the component, the force exerted by the threads of the bolt on the tapped internal surface of the inner portion causes the end surface 18 of the inner portion to move downwards relative to the end surface 28 of the outer portion, as the skirt 16 of the inner portion, partially collapses. As this happens, the radius of the base of the nut remains unchanged, the skirt 16 thus collapsing in a similar fashion to a rubber plunger for unblocking domestic waste water pipes. The relative displacement of the end surfaces 18 and 28 is proportional to the tensile reaction force exerted on the bolt (as a result of the compressive force exerted by the nut and bolt on the components being fastened together), and therefore provides an indication, measurable with a micrometer, for example, if not discernible by the naked eye, of whether the nut has been correctly tightened.

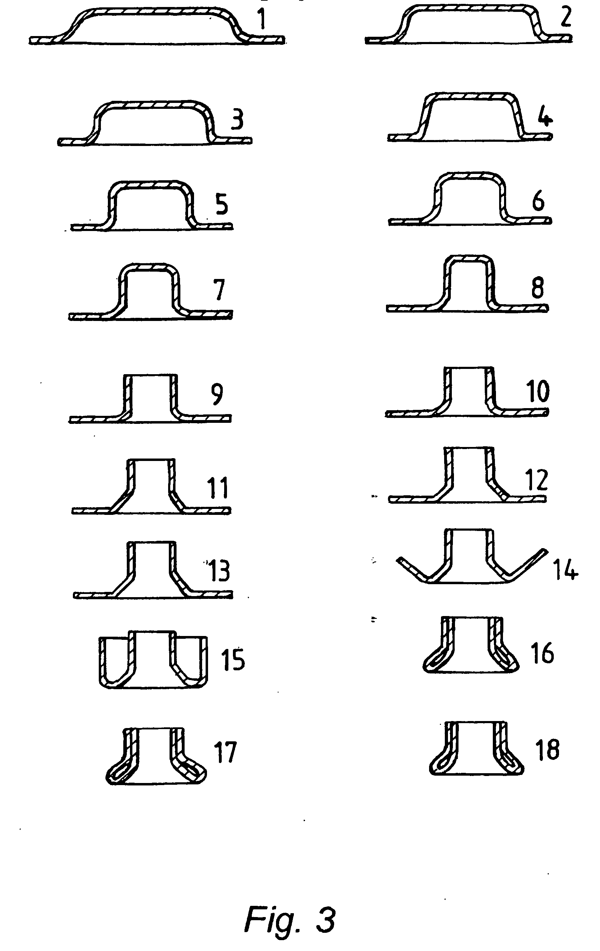

Turning next to Figure 3, the nut is formed from a sheet of spring steel. Stages 1 to 12 show a deep drawing operation in which the neck and skirt of the inner portion of the nut are formed and a central hole is punched in the end surface of the neck, leaving a circular flange projecting radially from the base of the skirt.

Stages 13 to 15 show a redrawing operation in which a cupped die encloses the neck and skirt of the inner portion of the nut and bears on the circular flange. The cupped die drives the inner portion of the nut into a funneled die, thereby bending the circular flange upwards so as to surround the inner portion of the nut.

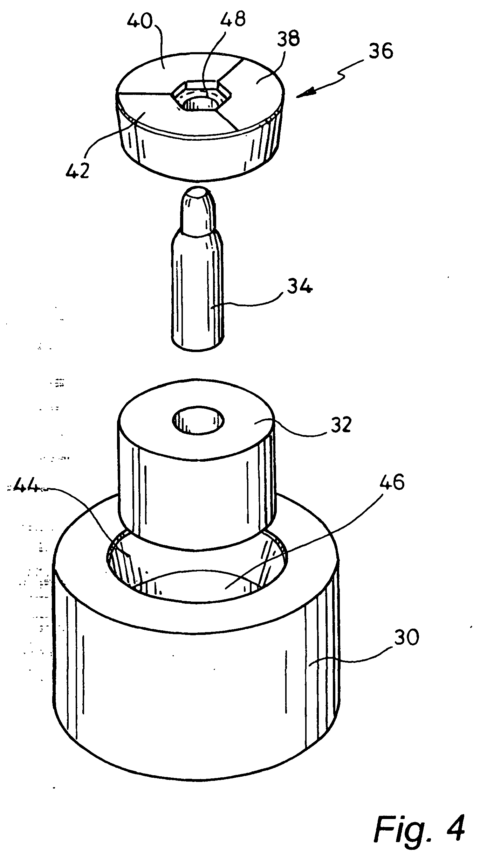

Stages 16 and 17 show a simulated cam tool operation, in which the hexagonal form is imparted to the outer portion of the nut. The simulated cam tool is shown in Figure 4, and comprises a die block 30, base 32, mandril 34 and split collet 36. The split collet 36 is made up of three identical segments 38, 40 and 42.

The die block 30 is hollow, the internal surface having an upper, tapered portion 44 and a lower, parallel-sided portion 46. The lower, parallel-sided portion 46 is sized to receive the base 32, which has a central, parallel-sided hole sized to receive the mandril 34. The tip of the mandril fits inside the inner portion of a nut 48, which is partially visible in the split collet 36. The split collet fits around the nut. In Figure 4 the three segments 38, 40 and 42 of the split collet are shown enclosing the nut 48 and in contact with one another. In practice this would not be possible until the simulated cam tool operation had been completed.

The external surface of the split collet is tapered, and sized such that with a nut placed between the three segments of the collet, the narrow end of the collet just fits into the upper, wide part of the internal taper of the die block. The internal surface of the split collet is hexagonal and the simulated cam tool operation consists of forcing the split collet containing the nut into the die block in which the base and mandril are held. The tapered portion 44 of the die block forces the three segments of the split collet inwards, thereby forming the hexagonal external surface of the outer portion. The base serves to centre the mandril relative to the die block and split collet, and the mandril ensures that the forces are applied symmetrically around the nut by the split collet.

Returning to Figure 3, stage 18 shows a roll form tapping operation, in which an internal thread is formed on the internal surface of the inner portion of the nut.

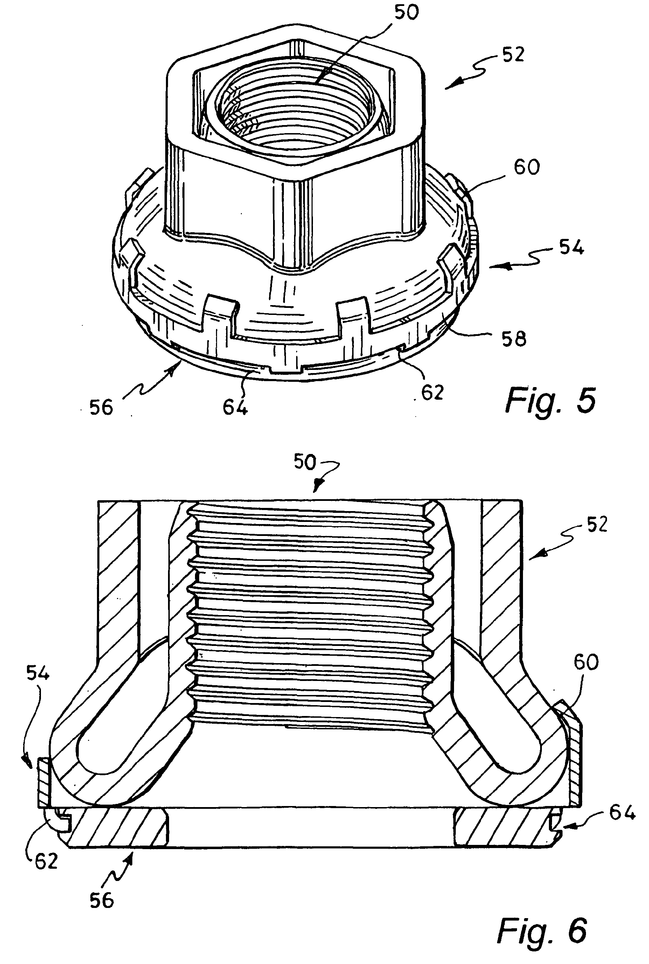

The second nut of Figure 5 consists of an inner portion 50, an outer portion 52, a cage 54 attached to the outer portion 52 and to a washer 56. The inner and outer portions are integrally formed as a single component from spring steel, the cage is formed from spring steel and the washer is made of hardened steel.

Turning to Figure 6, the inner and outer portions of the second nut are substantially as described in relation to the first nut. However, the end surface of the neck of the inner portion is convex rather than planar, and the external surface of the skirt and neck of the inner portion, and the internal surface of the skirt and neck of the outer portion define an annular cavity inside the nut. When the nut is not stressed the apex of the convex end surface of the neck of the inner portion and the end surface of the neck of the outer portion are coplanar.

Returning to Figure 5, the cage 54 consists of a hoop 58 formed with long, radially inwardly directed claws 60 that project axially from one edge of the hoop, and short, radially inwardly directed claws 62 that project axially from the other edge of the hoop. The hoop is formed with nine long claws and nine short claws, which are disposed equidistantly around the edges of the hoop. In Figure 5 six long claws and three short claws are visible.

The washer 56 is annular and formed with a continuous groove 64 in its external circumferential surface.

The short claws of the cage are engageable with the groove in the washer, and the long claws are engageable with the external surface of the skirt of the outer portion. With the long claws engaged with the skirt of the outer portion and the short claws engaged with the groove in the washer, the washer is retained adjacent to the base of the skirt, but capable of rotational movement relative to the inner and outer portions of the nut.

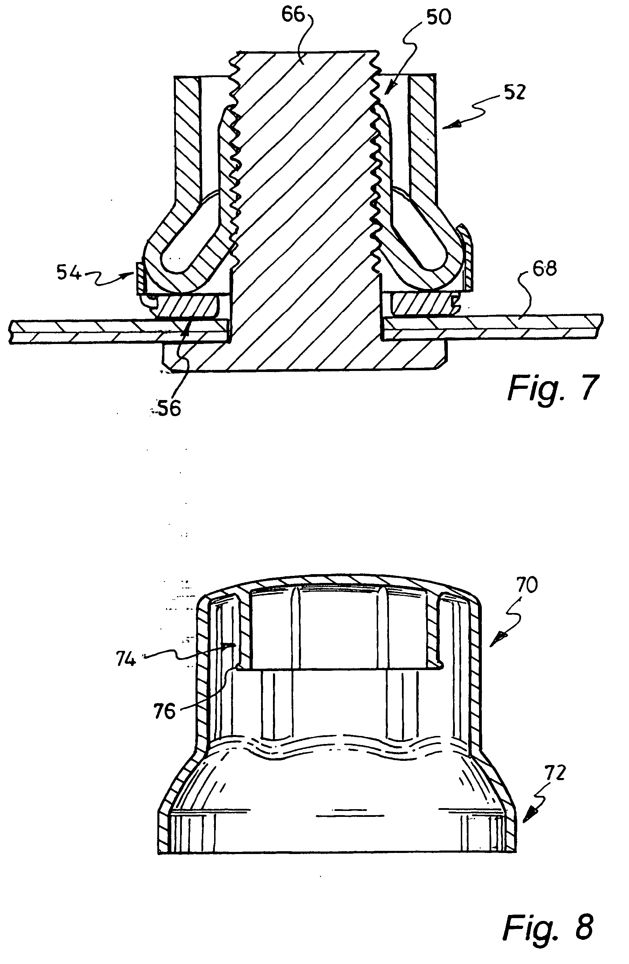

In this way, when the nut is tightened onto a stud 66 against a component 68, as shown in Figure 7, the washer 56 may remain stationary relative to the component, and the inner and outer portions be rotated relative to the washer and the component, so as to avoid the scoring of the surface of the component which would occur without the presence of the washer.

When the nut is tightened onto the stud 66 there is a relative axial displacement of the inner and outer portions of the nut, in which the inner portion is displaced towards the washer relative to the outer portion, such that the apex of the end surface of the inner portion is closer to the washer than the end surface of the outer portion.

Figure 8 shows an indicator cap that is formed from nylon-66. The cap is generally cup-shaped, having a hexagonal, parallel-sided closed end 70, and a flared circular open end 72. A central hexagonal, tubular member 74 projects from the closed end of the cap towards the open end of the cap. The end of the tubular member nearer to the open end of the cap is formed with a lip 76 that projects perpendicularly from the tubular member.

The internal dimensions of the cap are such that, but for the presence of the tubular member, the cap would form a snug fit over the second nut.

The external measurements of the lip of the tubular member are slightly larger than the internal measurements of the hexagonal neck of the outer portion of the second nut. The internal measurements of the tubular member are slightly smaller than the external diameter of the neck of-the inner portion of the second nut.

Thus when the second nut is tightened onto a stud, as shown in Figure 7, such that the inner portion is displaced towards the washer relative to the outer portion, the cap may be placed over the nut and the lip of the tubular member will deform slightly so as to engage with the internal surface of the neck of the outer portion of the nut.

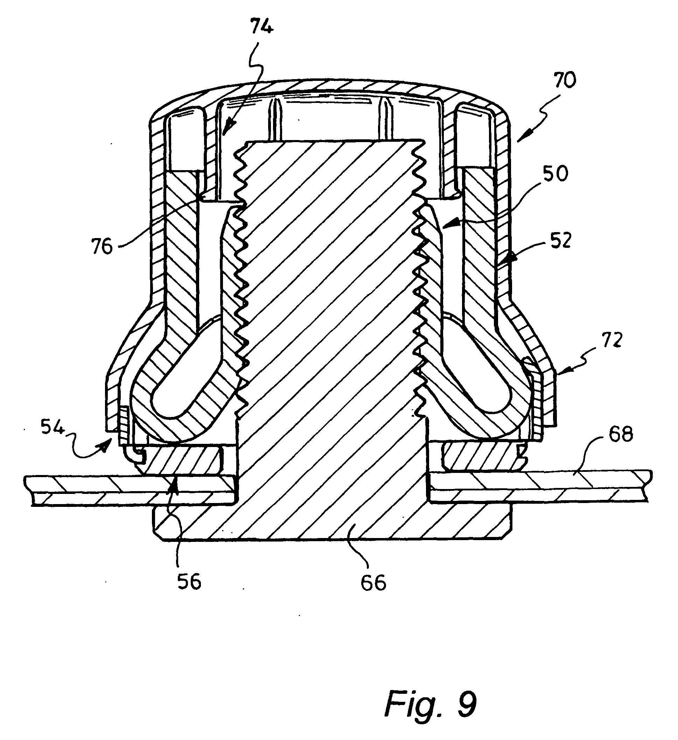

This is shown in Figure 9. The cap is held in place by friction between the deformed lip of the cap and the internal surface of the neck of the outer portion of the nut, since the tubular member is slightly wider than the internal measurements of the neck of the outer portion.

If the nut subsequently loosens, the inner portion of the nut will move away from the washer relative to the outer portion, until the apex of the end surface of the neck of the inner portion and the end surface of the neck of the outer portion are coplanar. The external diameter of the neck of the inner portion is slightly greater than the internal measurements of the tubular member of the cap, such that as the end surface of the neck of the inner portion moves away from the washer, it engages with the tubular member and pushes the cap off the nut, thus providing a visual indication that the nut has loosened.

It will be apparent that the above description relates only to two embodiments of the invention, and that the invention encompasses other embodiments as defined by the foregoing statements of the invention.

## Claims

1. A fastening element for use with a tie member (66) to fasten a first component (68) to a second component, the fastening element being adapted for attachment to the tie member, which in use passes through a part of at least one of the components, and for cooperating with the tie member to exert a compressive force on the components, the element comprising an inner portion (10, 50) resiliently joined to an outer portion (12, 52), in such a way that, when a tensile reaction force is applied to the tie member (66) as a result of said compressive force, said force causes the outer portion (12, 52) to be displaced relative to the inner portion (10, 50), **characterised in that**, when the fastening element is not stressed, end surfaces (18, 28) of the inner and outer portions are coplanar.

2. A fastening element according to claim 1, wherein the inner portion (10, 50) is formed integrally with the outer portion (12, 52).

3. A fastening element according to claim 1 or 2, wherein the inner (10, 50) and outer portions (12, 52) are so positioned relative to one another that they share a substantially common axis and the displacement of the outer portion relative to the inner portion is an axial displacement.

4. A fastening element according to any preceding claim, wherein the inner portion (10, 50) is tapped so as to be engageable with a threaded portion at a first end of the tie member (66).

5. A fastening element according to any preceding claim, wherein the outer portion (12, 52) is formed with flats (26) for engagement with a spanner or like tool.

6. A fastening element according to any preceding claim, wherein the fastening element is formed from sheet or strip spring steel.

7. A fastening element according to claim 3 or any claim dependent therefrom, wherein the fastening element comprises a nut, for use with a tie member (66) in the form of a bolt or stud.

8. A fastening element according to claim 7, wherein the fastening element further comprises a washer (56) that is rotatably attached to the nut, and that, in use, is interposed between the nut and the components (68).

9. A fastening element according to claim 8, wherein the washer (56) is annular, such that in use, the tie member (66) passes through the washer.

10. A fastening element according to claim 9, wherein the fastening element further comprises cage means (54) having first (60) and second (62) pluralities of axial, radially inwardly projecting claws, the first plurality (60) of claws being engageable with the nut and the second plurality (62) of claws being engageable with the washer (56).

11. A fastening element according to claim 10, wherein the nut is formed with a generally frusto-conical portion (24) and the annular washer (56) is formed with a continuous groove (64) in its external circumference, and the first plurality (60) of claws of the cage means are engageable with the frusto-conical portion (24) of the nut and the second plurality (62) of claws are engageable with the groove (64) of the washer (56).

12. A fastening element according to any of claims 8 to 11, wherein the washer (56) is formed from hardened steel.

13. A fastening element according to any of claims 10 to 12, wherein the cage means (54) is formed from mild or spring steel.

14. An indicator element for use with a fastening element, the indicator element having engagement means (76) that are releasably engageable with the outer portion (12, 52) of a fastening element according to any preceding claim such that the indicator element is retained by the fastening element when the outer portion (12, 52) of the fastening element is displaced relative to the inner portion (10, 50), and released if the displacement of the outer portion (12, 52) relative to the inner portion (10, 50) decreases substantially.

15. An indicator element according to claim 14, wherein the engagement means (76) are releasably engageable with an internal surface of the outer portion (12, 52) of the fastening element when the outer portion (12, 52) is displaced relative to the inner portion (10, 50).

16. An indicator element according to claim 15, wherein the indicator element comprises a cap for placing over the fastening element, and the engagement means comprises a central internal tubular member (74) of the cap with a perpendicularly outwardly projecting lip (76) that is engageable with the internal surface of the outer portion (12, 52) of the fastening element when the outer portion (12, 52) is displaced relative to the inner portion (10, 50).

17. An indicator element according to any of claims 14 to 16, wherein the indicator element is formed from a plastics material.

18. An indicator element according to claim 17, wherein the indicator element is formed from nylon-66.

19. A method of securing a first component (68) to a second component, by means of a fastener comprising a fastening element according to any of claims 1 to 13, and a tie member (66), the method comprising the steps of applying a progressively increasing compressive force to the two components, by means of the fastener, and determining whether a displacement of the inner portion (10, 50) relative to the outer portion (12, 52) reaches a minimum magnitude indicative of a minimum desired magnitude of compressive force.

20. A method according to claim 19, wherein the step of determining whether the displacement reaches a minimum magnitude is by measurement of the displacement of the inner portion (10, 50) relative to the outer portion (12, 52).

21. A method according to claim 19, wherein the step of determining whether the displacement reaches a minimum magnitude is by visual inspection of the displacement of the inner portion (10, 50) relative to the outer portion (12, 52).

22. A method according to claim 19, wherein the step of determining whether the displacement reaches a minimum magnitude is by attempting to engage an indicator element according to any of claims 14 to 18 with the fastening element, and observing whether the indicator element is retained by the fastening element.

23. A method according to any of claims 19 to 22, wherein the method further comprises the step of determining whether the displacement of the inner portion (10, 50) relative to the outer portion (12, 52) is less than a maximum magnitude, corresponding to a maximum desired magnitude of compressive force.

24. A method according to any of claims 19 to 23, wherein the inner portion (10, 50) of the fastening element is tapped and a first end of the tie member (66) has a threaded portion, the step of applying the compressive force being achieved by screwing the tapped inner portion (10, 50) of the element onto the threaded portion of the member (66).

25. A method according to any of claims 19 to 24, wherein the outer portion (12, 52) of the fastening element is formed with flats (26) for engagement with a spanner or like tool, and the step of applying said force is achieved by applying a torque to the fastening element.

26. A fastening element according to any of claims 1 to 13, and a bolt (66) for use therewith.

## Patentansprüche

1. Befestigungselement zur Verwendung mit einem Verbindungsteil (66), um eine erste Komponente (68) an einer zweiten Komponenten zu befestigen, wobei das Befestigungselement zur Befestigung am Verbindungsteil angepasst ist, welches im Gebrauch durch einen Teil von mindestens einer der Komponenten verläuft, und zur Zusammenwirkung mit dem Verbindungsteil, um eine Druckkraft auf die Komponenten auszuüben, wobei das Element einen inneren Teil (10, 50) aufweist, der elastisch mit einem äußeren Teil (12, 52) auf so eine Weise verbunden ist, dass, wenn eine Zugreaktionskraft an das Verbindungsteil (66) als Ergebnis der Druckkraft angelegt wird, die Kraft bewirkt, dass der äußere Teil (12, 52) relativ zum inneren Teil (10, 50) verschoben wird, **dadurch gekennzeichnet, dass** wenn das Befestigungselement nicht belastet ist, die Endflächen (18, 28) der inneren und äußeren Teile koplanar sind.

2. Befestigungselement nach Anspruch 1, wobei der innere Teil (10, 50) integral mit dem äußeren Teil (12, 52) gebildet ist.

3. Befestigungselement nach Anspruch 1 oder 2, wobei die inneren (10, 50) und äußeren Teile (12, 52) so relativ zueinander angeordnet sind, dass sie im wesentlichen eine gemeinsame Achse teilen und die Verschiebung des äußeren Teils relativ zum inneren Teil eine axiale Verschiebung ist.

4. Befestigungselement nach irgendeinem der vorhergehenden Ansprüche, wobei der innere Teil (10, 50) mit einem Gewinde versehen ist, um so mit einem Gewindeteil an einem ersten Ende des Verbindungsteils (66) in Eingriff gebracht werden zu können.

5. Befestigungselement nach irgendeinem der vorhergehenden Ansprüche, wobei der äußere Teil (12, 52) mit Flächen (26) zum Eingriff mit einem Schraubenschlüssel oder einem ähnlichen Teil ausgebildet ist.

6. Befestigungselement nach irgendeinem der vorhergehenden Ansprüche, wobei das Befestigungselement aus Blech- oder Bandfederstahl gebildet ist.

7. Befestigungselement nach Anspruch 3 oder irgendeinem davon abhängigen Anspruch, wobei das Befestigungselement eine Mutter zur Verwendung mit einem Verbindungsteil (66) in der Form einer Schraube oder eines Bolzens aufweist.

8. Befestigungselement nach Anspruch 7, wobei das Befestigungselement ferner eine Unterlegscheibe (56) aufweist, die drehbar an der Mutter befestigt ist und die im Gebrauch zwischen der Mutter und den Komponenten (68) angeordnet ist.

9. Befestigungselement nach Anspruch 8, wobei die Unterlegscheibe (56) ringförmig ist, so dass im Gebrauch das Verbindungsteil (66) durch die Unterlegscheibe verläuft.

10. Befestigungselement nach Anspruch 9, wobei das Befestigungselement ferner ein Käfigmittel (54) aufweist, welches eine erste (60) und eine zweite (62) Mehrzahl von axialen, radialen, nach innen vorspringenden Klauen aufweisen, wobei die erste Mehrzahl (60) von Klauen mit der Mutter in Eingriff bringbar ist, und die zweite Vielzahl (62) von Klauen mit der Unterlegscheibe (56) in Eingriff bringbar ist.

11. Befestigungselement nach Anspruch 10, wobei die Mutter mit einem im allgemeinen kegelstumpfförmigen Teil (24) ausgebildet ist, und die ringförmige Unterlegscheibe (56) mit einer kontinuierlichen Nut (64) in ihrem äußeren Umfang ausgebildet ist, und die erste Mehrzahl (60) von Klauen des Käfigmittels mit dem kegelstumpfförmigen Teil (24) der Mutter in Eingriff bringbar ist, und die zweite-Mehrzahl (62) von Klauen mit der Nut (64) der Unterlegscheibe (56) in Eingriff bringbar ist.

12. Befestigungselement nach irgendeinem der Ansprüche 8 bis 11, wobei die Unterlegscheibe (56) aus gehärtetem Stahl gebildet ist.

13. Befestigungselement nach irgendeinem der Ansprüche 10 bis 12, wobei das Käfigmittel (54) aus Weichstahl oder Federstahl gebildet ist.

14. Indikatorelement zur Verwendung mit einem Befestigungselement, wobei das Indikatorelement Eingriffsmittel (76) aufweist, die lösbar mit dem äußeren Teil (12, 52) eines Befestigungselements nach irgendeinem der vorhergehenden Ansprüche so in Eingriff bringbar sind, dass das Indikatorelement durch das Befestigungselement gehalten wird, wenn der äußere Teil (12, 52) des Befestigungselements relativ zum inneren Teil (10, 50) verschoben wird, und freigegeben wird, wenn die Verschiebung des äußeren Teils (12, 52) relativ zum inneren Teil (10, 50) wesentlich abnimmt.

15. Indikatorelement nach Anspruch 14, wobei die Eingriffsmittel (76) lösbar mit einer inneren Fläche des äußeren Teils (12, 52) des Befestigungselements in Eingriff bringbar sind, wenn der äußere Teil (12, 52) relativ zum inneren Teil (10, 50) verschoben ist.

16. Indikatorelement nach Anspruch 15, wobei das Indikatorelement eine Kappe zum Anordnen über dem Befestigungselement aufweist, und das Eingriffsmittel ein zentrales inneres rohrförmiges Element (74) der Kappe mit einer senkrecht nach außen ragenden Lippe (76) aufweist, die mit der inneren Fläche des äußeren Teils (12, 52) des Befestigungselements in Eingriff bringbar ist, wenn der äußere Teil (12, 52) relativ zum inneren Teil (10, 52) verschoben ist.

17. Indikatorelement nach irgendeinem der Ansprüche 14 bis 16, wobei das Indikatorelement aus einem Kunststoffmaterial gebildet ist.

18. Indikatorelement nach Anspruch 17, wobei das Indikatorelement aus Nylon-66 gebildet ist.

19. Verfahren zum Befestigen einer ersten Komponente (68) an einer zweiten Komponente mittels eines Befestigungselements nach irgendeinem der Ansprüche 1 bis 13, und einem Verbindungsteil (66), wobei das Verfahren die Schritte des Anlegens einer fortschreitend zunehmenden Druckkraft auf die zwei Komponenten mittels des Befestigungselements und Bestimmen, ob die Verschiebung des inneren Teils (10, 50) relativ zum äußeren Teil (12, 52) eine minimale Größe erreicht, die ein Minimum gewünschter Größe der Druckkraft anzeigt, aufweist.

20. Verfahren nach Anspruch 19, wobei der Schritt des Bestimmens, ob die Verschiebung eine minimale Größe erreicht, durch Messung der Verschiebung des inneren Teils (10, 50) relativ zum äußeren Teil (12, 52) erfolgt.

21. Verfahren nach Anspruch 19, wobei der Schritt des Bestimmens, ob die Verschiebung eine minimale Größe erreicht, durch visuelle Inspektion der Verschiebung des inneren Teils (10, 50) relativ zum äußeren Teil (12, 52) erfolgt.

22. Verfahren nach Anspruch 19, wobei der Schritt des Bestimmens, ob die Verschiebung eine minimale Größe erreicht, durch den Versuch erfolgt, ein Indikatorelement nach irgendeinem der Ansprüche 14 bis 18 mit dem Befestigungselement in Eingriff zu bringen und zu beobachten, ob das Indikatorelement durch das Befestigungselement festgehalten wird.

23. Verfahren nach irgendeinem der Ansprüche 19 bis 22, wobei das Verfahren ferner den Schritt des Bestimmens aufweist, ob die Verschiebung des inneren Teils (10, 50) relativ zum äußeren Teil (12, 52) weniger ist als eine maximale Größe, entsprechend einer maximalen gewünschten Größe der Druckkraft.

24. Verfahren nach irgendeinem der Ansprüche 19 bis 23, wobei der innere Teil (10, 50) des Befestigungselements mit einem Gewinde versehen ist und ein erstes Ende des Verbindungsteils (66) einen Gewindeteil aufweist, wobei der Schritt des Anlegens der Druckkraft erreicht wird durch Schrauben des mit einem Gewinde versehenen inneren Teils (10, 50) des Elements auf den Gewindeteil des Verbindungsteils (66).

25. Verfahren nach irgendeinem der Ansprüche 19 bis 24, wobei der äußere Teil (12, 52) des Befestigungselements mit Flächen (26) zum Eingriff mit einem Schraubenschlüssel oder einem ähnlichen Werkzeug ausgebildet ist, und der Schritt des Anlegens der Kraft erreicht wird durch Anlegen eines Drehmoments an das Befestigungselement.

26. Befestigungselement nach irgendeinem der Ansprüche 1 bis 13 und eine Schraube (66) zur Verwendung damit.

## Revendications

1. Elément de fixation destiné à être utilisé avec un élément d'attache (66) afin d'attacher un premier composant (68) à un second composant, l'élément de fixation étant adapté pour être attaché à l'élément d'attache qui, lors de l'utilisation, passe à travers une partie d'au moins l'un des composants, et pour coopérer avec l'élément d'attache de manière à exercer une force de compression sur les composants, l'élément comprenant une partie intérieure (10, 50) jointe de manière élastique à une partie extérieure (12, 52) de telle sorte que, lorsqu'une force de traction de réaction est appliquée sur l'élément d'attache (66) du fait de ladite force de compression, ladite force amène la partie extérieure (12, 52) à être déplacée par rapport à la partie intérieure (10, 50), **caractérisé en ce que**, lorsque l'élément de fixation n'est pas sous contrainte, les surfaces d'extrémité (18, 28) des parties intérieure et extérieure sont coplanaires.

2. Elément de fixation selon la revendication 1, dans lequel la partie intérieure (10, 50) fait corps avec la partie extérieure (12, 52).

3. Elément de fixation selon la revendication 1 ou 2, dans lequel les parties intérieure (10, 50) et extérieure (12, 52) sont positionnées l'une par rapport à l'autre de telle sorte qu'elles partagent un axe sensiblement commun, et le déplacement de la partie extérieure par rapport à la partie intérieure est un déplacement axial.

4. Elément de fixation selon l'une quelconque des revendications précédentes, dans lequel la partie intérieure (10, 50) est taraudée de manière à pouvoir venir en prise avec une partie filetée au niveau d'une première extrémité de l'élément d'attache (66).

5. Elément de fixation selon l'une quelconque des revendications précédentes, dans lequel la partie extérieure (12, 52) est formée avec des facettes (26) destinées à venir en prise avec une clé ou un outil similaire.

6. Elément de fixation selon l'une quelconque des revendications précédentes, dans lequel l'élément de fixation est formé à partir d'acier à ressort en feuille ou en bande.

7. Elément de fixation selon la revendication 3 ou l'une quelconque des revendications qui en dépendent, dans lequel l'élément de fixation comprend un écrou destiné à être utilisé avec un élément d'attache (66) se présentant sous la forme d'un boulon ou d'un goujon.

8. Elément de fixation selon la revendication 7, dans lequel l'élément de fixation comprend en outre une rondelle (56) qui est attachée de manière rotative à l'écrou et qui, lors de l'utilisation, est intercalée entre l'écrou et les composants (68).

9. Elément de fixation selon la revendication 8, dans lequel la rondelle (56) est annulaire de telle sorte que, lors de l'utilisation, l'élément d'attache (66) passe à travers la rondelle.

10. Elément de fixation selon la revendication 9, dans lequel l'élément de fixation comprend en outre des moyens formant cage (54) comportant une première (60) et une seconde (62) pluralités de griffes axiales, faisant saillie de manière radiale vers l'intérieur, la première pluralité (60) de griffes pouvant venir en prise avec l'écrou et la seconde pluralité (62) de griffes pouvant venir en prise avec la rondelle (56).

11. Elément de fixation selon la revendication 10, dans lequel l'écrou est formé avec une partie généralement tronconique (24) et la rondelle annulaire (56) est formée avec une rainure continue (64) dans sa circonférence externe, et la première pluralité (60) de griffes des moyens formant cage peut venir en prise avec la partie tronconique (24) de l'écrou et la seconde pluralité (62) de griffes peut venir en prise avec la rainure (64) de la rondelle (56).

12. Elément de fixation selon l'une quelconque des revendications 8 à 11, dans lequel la rondelle (56) est formée à partir d'acier trempé.

13. Elément de fixation selon l'une quelconque des revendications 10 à 12, dans lequel les moyens formant cage (54) sont formés à partir d'acier doux ou d'acier à ressort.

14. Elément indicateur destiné à être utilisé avec un élément de fixation, l'élément indicateur comportant des moyens de mise en prise (76) qui peuvent venir en prise de manière détachable avec la partie extérieure (12, 52) d'un élément de fixation selon l'une quelconque des revendications précédentes, de telle sorte que l'élément indicateur soit retenu par l'élément de fixation lorsque la partie extérieure (12, 52) de l'élément de fixation est déplacée par rapport à la partie intérieure (10, 50), et dégagé si le déplacement de la partie extérieure (12, 52) par rapport à la partie intérieure (10, 50) diminue sensiblement.

15. Elément indicateur selon la revendication 14, dans lequel les moyens de mise en prise (76) peuvent venir en prise de manière détachable avec une surface interne de la partie extérieure (12, 52) de l'élément de fixation lorsque la partie extérieure (12, 52) est déplacée par rapport à la partie intérieure (10, 50).

16. Elément indicateur selon la revendication 15, dans lequel l'élément indicateur comprend un capuchon destiné à être placé sur l'élément de fixation, et les moyens de mise en prise comprennent un élément tubulaire interne central (74) du capuchon avec une lèvre faisant saillie de manière perpendiculaire vers l'extérieur (76) qui peut venir en prise avec la surface interne de la partie extérieure (12, 52) de l'élément de fixation lorsque la partie extérieure (12, 52) est déplacée par rapport à la partie intérieure (10, 50).

17. Elément indicateur selon l'une quelconque des revendications 14 à 16, dans lequel l'élément indicateur est formé à partir d'une matière plastique.

18. Elément indicateur selon la revendication 17, dans lequel l'élément indicateur est formé à partir de nylon-66.

19. Procédé pour fixer un premier composant (68) sur un second composant, à l'aide d'un dispositif de fixation comprenant un élément de fixation selon l'une quelconque des revendications 1 à 13, et un élément d'attache (66), le procédé comprenant les étapes consistant à appliquer une force de compression qui augmente progressivement sur les deux composants, à l'aide du dispositif de fixation, et à déterminer si un déplacement de la partie intérieure (10, 50) par rapport à la partie extérieure (12, 52) atteint une magnitude minimale indiquant une magnitude minimale souhaitée d'une force de compression.

20. Procédé selon la revendication 19, dans lequel l'étape consistant à déterminer si le déplacement atteint une magnitude minimale se fait en mesurant le déplacement de la partie intérieure (10, 50) par rapport à la partie extérieure (12, 52).

21. Procédé selon la revendication 19, dans lequel l'étape consistant à déterminer si le déplacement atteint une magnitude minimale se fait par inspection visuelle du déplacement de la partie intérieure (10, 50) par rapport à la partie extérieure (12, 52).

22. Procédé selon la revendication 19, dans lequel l'étape consistant à déterminer si le déplacement atteint une magnitude minimale se fait en tentant de mettre en prise un élément indicateur selon l'une quelconque des revendications 14 à 18 avec l'élément de fixation, et en observant si l'élément indicateur est retenu par l'élément de fixation.

23. Procédé selon l'une quelconque des revendications 19 à 22, dans lequel le procédé comprend en outre l'étape consistant à déterminer si le déplacement de la partie intérieure (10, 50) par rapport à la partie extérieure (12, 52) est inférieur à une magnitude maximale, correspondant à une magnitude maximale souhaitée de la force de compression.

24. Procédé selon l'une quelconque des revendications 19 à 23, dans lequel la partie intérieure (10, 50) de l'élément de fixation est taraudée et une première extrémité de l'élément d'attache (66) comporte une partie filetée, l'étape consistant à appliquer la force de compression étant obtenue en vissant la partie intérieure taraudée (10, 50) de l'élément sur la partie filetée de l'élément (66).

25. Procédé selon l'une quelconque des revendications 19 à 24, dans lequel la partie extérieure (12, 52) de l'élément de fixation est formée avec des facettes (26) destinées à venir en prise avec une clé ou un outil similaire, et l'étape consistant à appliquer ladite force est obtenue en appliquant un couple sur l'élément de fixation.

26. Elément de fixation selon l'une quelconque des revendications 1 à 13, et boulon (66) destiné à être utilisé avec celui-ci.
